Europäisches Patentamt

European Patent Office

Office européen des brevets

(19)

(11) Publication number: 0 394 942
A2

# EUROPEAN PATENT APPLICATION

(21) Application number: 90107701.6

(22) Date of filing: 24.04.90

(51) Int. Cl.⁵: G01D 5/34

(30) Priority: 26.04.89 JP 106667/89

(43) Date of publication of application:
31.10.90 Bulletin 90/44

(84) Designated Contracting States:
DE GB

(71) Applicant: CANON KABUSHIKI KAISHA
30-2, 3-chome, Shimomaruko, Ohta-ku
Tokyo(JP)

(72) Inventor: Ishii, Satoshi, c/o Canon Kabushiki
Kaisha
30-2, 3-chome, Shimomaruko
Ohta-ku, Tokyo(JP)
Inventor: Nishimura, Tetsuharu, c/o Canon
Kabushiki Kaisha
30-2, 3-chome, Shimomaruko
Ohta-ku, Tokyo(JP)

Inventor: Ishizuka, Koh, c/o Canon Kabushiki
Kaisha
30-2, 3-chome, Shimomaruko
Ohta-ku, Tokyo(JP)
Inventor: Tsukiji, Masaaki, c/o Canon
Kabushiki Kaisha
30-2, 3-chome, Shimomaruko
Ohta-ku, Tokyo(JP)
Inventor: Kubota, Yoichi, c/o Canon Kabushiki
Kaisha
30-2, 3-chome, Shimomaruko
Ohta-ku, Tokyo(JP)

(74) Representative: Pellmann, Hans-Bernd,
Dipl.-Ing. et al
Patentanwaltsbüro
Tiedtke-Bühling-Kinne-Grupe-Pellmann-Gra-
ms-Struif Bavariaring 4
D-8000 München 2(DE)

(54) A signal insertion processor and an encoder using the processor.

(57) A processor generates signals having an exact
phase difference of 90 degrees and signal having an
exact phase difference of 180 degrees, from two
sine wave signals having different phases produced
by a detector such as an encoder, and effects signal
insertion base on those signals.

FIG. 2

EP 0 394 942 A2

# A SIGNAL INSERTION PROCESSOR AND AN ENCODER USING THE PROCESSOR

## BACKGROUND OF THE INVENTION

### Field of the Invention

The present invention relates to a signal insertion processor and a rotary encoder or linear encoder using the processor, and more particularly to a signal insertion processor which inserts signals having different phases from two-phase sine wave signals having a phase difference therebetween to produce a plurality of signals having different phase differences, and an encoder which enhances a detection resolution power by utilizing the signal insertion processor.

### Related Background Art

In a prior art rotary encoder of an incremental type, it is common to detect a rotation displacement and a rotation direction of a rotating object by using two sine wave signals having a predetermined phase difference therebetween derived from two photo-detection means.

In such an encoder, a singal insertion circuit which generates a plurality of signals having a phase difference corresponding to a division unit, for an original signal, and detects zero-crossing points of the waveform to generate a division pulse to improve the detection resolution power.

Fig. 3 shows a main portion of the prior art signal insertion circuit. Numerals 21 and 22 denote input terminals, to which two sine wave signals a and b having different phases derived from two photo-detectors of the encoder are applied. For example, for the sine wave signal a from the input terminal 21, the since wave signal b having the phase difference of 90 degrees is applied to the input terminal 22. The input signal from the input terminal 21 is applied to an inverting buffer 23 so that the sine wave signal a is inverted to produce a sine wave signal c having a phase difference of 180 degrees. The three sine wave signals a, b and c whose phase differences change by 90 degrees are wight-summed by resistors R to insert a sine wave signal of a desired phase. In Fig. 3, the resistors R have the same resistance so that two sine wave signals d and e having the phase differences of 45 degrees and 135 degrees are produced by the insertion.

In general, if the phase difference between the two sine wave signals applied to the signal insertion circuit is exactly 90 degrees, the signal insertion is done exactly. However, in actual, the phase difference between the signals slightly deviates from 90 degrees to 90 ± $\alpha$ degrees by various factors. As a result, precise signal insertion cannot be attained.

For example, in the encoder, the phase difference between the two-phase signals is usually set by finely adjusting the position or angle of the assembled parts. However, it is difficult to produce the two-phase signals having the exact phase difference of 90 degrees due to the assembling accuracy, and manpower is required and the apparatus becomes complex in order to overcome the above difficulty.

## SUMMARY OF THE INVENTION

It is an object of the present invention to provide a signal insertion processor which attains accurate signal insertion even if a phase difference between two input sine wave signals is not exactly 90 degrees.

It is another object of the present invention to provide an accurate and high resolution encoder which uses the above signal insertion processor.

It is other object of the present invention to provide an inexpensive encoder which attains accurate and high resolution detection even if an assembling accuracy is not high.

## BRIEF DESCRIPTION OF THE DRAWINGS

Fig. 1 shows a diagram of a signal insertion circuit for an encoder in accordance with one embodiment of the present invention,

Fig. 2 shows a configuration of the encoder, and

Fig. 3 shows a diagram of a prior art signal insertion circuit.

## DESCRIPTION OF THE PREFERRED EMBODIMENTS

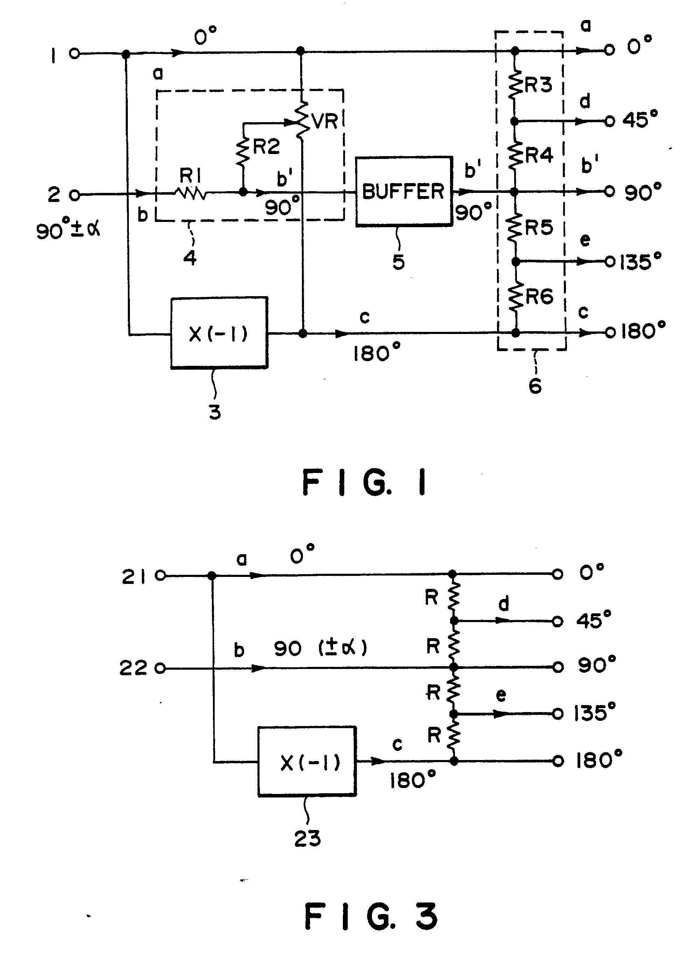

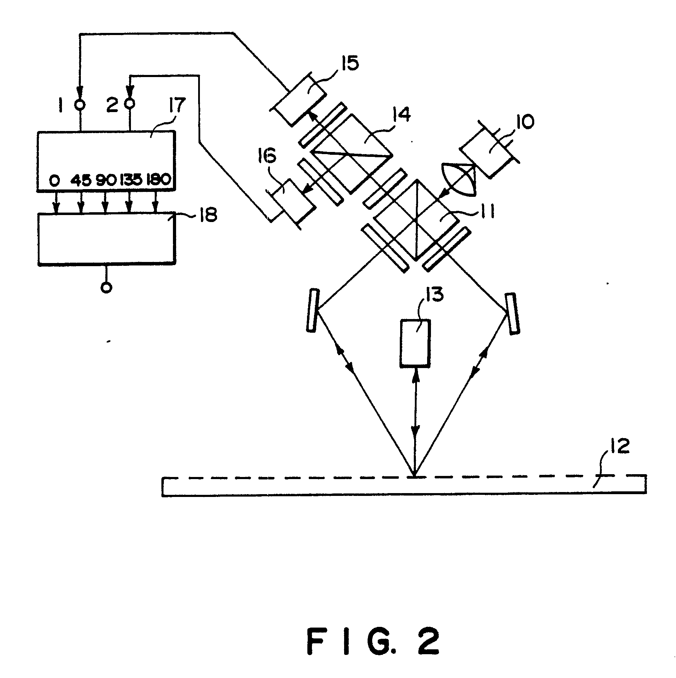

One embodiment of the present invention is now explained in detail with reference to the accompanying drawings. Fig. 1 shows a diagram of a main portion of a signal insertion processor for an encoder, and Fig. 2 shows a configuration of the encoder.

In Fig. 1, numerals 1 and 2 denote input terminals to which two sine wave signals a and b having different phases are applied from two photo-detectors of the encoder. For example, for the first sine wave signal a applied to the input terminal 1, the second sine wave signal b having the phase difference of approximately 90 degrees (90 ± α) is applied to the input terminal 2. Numeral 4 denotes a signal combine circuit which comprises resistors R1 and R2 having predetermined resistances and a variable resistor UR. The signal from the input terminal 1 is weight-summed by the resistance VR + R2, and the signal from the input terminal 2 is weight-summed by the resistance R1. By properly adjusting the variable resistor VR, a third sine wave signal b' having the exact phase difference of 90 degrees from the first sine wave signal a may be generated.

Numeral 3 denotes an inverting buffer which inverts the first sine wave signal a applied to the input terminal 1 to produce a fourth sine wave signal c having a phase difference of 180 degrees.

Numeral 5 denotes a buffer. The first and fourth sine wave signals a and c as well as the third sine wave signal b' are supplied to the buffer 5 to prevent the succeeding electrical circuit from being affected by a change of load status.

Numeral 6 denotes a signal insertion circuit. The signals a, b, and c are applied to the signal insertion circuit 6. By properly setting the resistances of the resistors R3 - R6 of the insertion circuit 6, and insertion signal having predetermined phase differences from the three signals a, b' and c having different phase is produced.

In the present embodiment, the resistors R3 - R6 have the same resistance so that the three sine wave signals a, b' and c having the phase differences of 0, 90 and 180 degrees, respectively, are uniformly weight-summed subtracted. As a result, two insertion signals, that is, a sine wave signal d having a phase difference of 45 degrees which is a mid-point of 0 degree and 90 degrees, and a sine wave signal e having a phase difference of 135 degrees which is a mid-point of 90 degrees and 180 degrees, are produced.

In addition to the generation of the insertion signal between the reference signals, more signals may be inserted by increasing the number of resistors so that the resolution power is further improved.

Fig. 1 shows a principal circuit of the present invention, and buffers and amplifiers may be arranged at appropriate positions for the respective signals.

Fig. 2 shows a configuration of the encoder having the signal insertion processor. A light beam emitted from a light source 10 such as a semiconductor laser which emits a coherent light beam is slit into two beams by a beam splitter 11 and it is directed to one point on a diffraction grating 12. The diffraction grating is formed on an object which moves relative to the light beam. In case of a rotary encoder, it is formed along a direction of rotation of a rotating object, and in case of a linear encoder, it is formed along a direction of movement of a linearly relatively moved object. The ±1 order diffracted lights generated by the diffraction grating is reflected by a reflection optical system 13 and directed back to the same position on the diffraction grating. The generated re-diffracted light returns along the substantially same light path as that of the input light. The interference lights formed by the re-diffracted light are detected by photo-detectors 15 and 16 as the interference light having the phase difference of 90 degrees by a deflection beam splitter 14 and a deflection plate. The detection signals produced by the photo-detectors are applied to a signal insertion processor 17, which is identical to that shown in Fig. 1 to produce the insertion signal. A pulse output circuit 18 detects zero-crossing points of the waveforms of the sine wave signals to generate a division pulse, which is output as a detection pulse representing the relative displacement of the diffraction grating. Thus, as many detection pulses as the number corresponding to the displacement (rotation or movement) of the diffraction grating relative to the incident light beam are produced.

Since the light beam is directed twice to the diffraction grating and the interference light of the re-diffracted light is detected, the resolution power is high. Further, since double number of pulses are produced by the insertion for the signal, the resolution power is doubled and an encoder having a high resolution power is provided.

The optical arrangement of the encoder is not limited to that shown in Fig. 2 but various arrangements such as optical systems shown in USP 4629886 or USP 4676645 may be used.

A processor generates signals having an exact phase difference of 90 degrees and signal having an exact phase difference of 180 degrees, from two sine wave signals having different phases produced by a detector such as an encoder, and effects signal insertion base on those signals.

## Claims

1. A signal processor comprising:
input means for inputting a first sine wave signal and a second sine wave signal having different phases; and
combination means for weight-summing/subtracting the input first and second sine wave signals to produce a third sine wave signal having a phase difference of 90 degrees from the first sine wave signal.

2. A signal processor according to Claim 1 further comprising:
inversion means for inverting the first sine wave signal to produce a fourth sine wave signal having a phase difference of 180 degrees from the first sine wave signal; and

insertion means for inserting a sine wave having a desired phase difference relative to the first, third and fourth sine wave signals.

3. A signal processor according to Claim 2 wherein said insertion means produces an insertion signal by weight-summing/subtracting the first, third and fourth sine wave signals.

4. A signal insertion processor for an encoder comprising:

input means for inputting a first sine wave signal and a second sine wave signal having different phases produced by two photo-detectors of the encoder;

combination means for weight-summing/subtracting the input first and second sine wave signals to produce a third sine wave signal having a phase difference of 90 degrees from the first sine wave signal;

inversion means for inverting the first sine wave signal to produce a fourth sine wave signal having a phase difference of 180 degrees from the first sine wave signal;

insertion means for inserting a sine wave signal having a desired phase difference relative to the first, third and fourth sine wave signals; and

output means for producing a pulse determined by periods of the first to fourth sine wave signals and the sine wave signal inserted by said insertion means.

5. A signal insertion processor for an encoder according to Claim 4 wherein said insertion means produces an insertion signal by weight-summing/subtracting the first, third and fourth sine wave signals.

6. An encoder having a signal insertion processor, comprising:

light source means for irradiating a coherent light beam to a diffraction grating;

detection means including two photo-detectors for detecting interference lights by diffracted light from the diffraction grating by shifting phases;

input means for inputting a first sine wave signal and a second sine wave signal having different phases produced by said two photo-detectors;

combination means for weight-summing/subtracting the input first and second sine wave signals to produce a third sine wave signal having a phase difference of 90 degrees from the first sine wave signal;

inversion means for inverting the first sine wave signal to produce a fourth sine wave signal having a phase difference of 180 degrees from the first sine wave signal;

insertion means for inserting a sine wave signal having a desired phase difference relative to the first, third and fourth sine wave signals; and

output means for producing a pulse determined by periods of the first to fourth sine wave signals and the sine wave signal inserted by said insertion means.

7. An encoder according to Claim 6 wherein said encoder is a rotary encoder, said diffraction grating is formed along a direction of rotation of a rotating object, and said output means produces as many pulses as the number representing the rotation amount of the diffraction grating.

8. An encoder according to Claim 6 wherein said encoder is a linear encoder, said diffraction grating is formed along a direction of movement of a moving object, and said output means produces as many pulses as the number representing a displacement of the diffraction grating.

9. An encoder according to Claim 6 wherein said light source means includes a semiconductor laser.

10. an encoder according to Claim 6 wherein said insertion means produces an insertion signal by weight-summing/subtracting the first, third and fourth sine wave signals.

11. An encoder according to Claim 6 wherein said output means produces pulses by detecting zero-crossing points of the sine wave signals.

FIG. 1

FIG. 3

# F I G. 2